# EUROPÄISCHE PATENTSCHRIFT

(11) **EP 0 523 411 B1**
(45) Veröffentlichungstag und Bekanntmachung des Hinweises auf die Patenterteilung: **28.05.1997**
(21) Anmeldenummer: 92110619.1
(22) Anmeldetag: 24.06.1992
(51) Int. Cl.: B01D 17/04

(54) **Abwasserreinigungsverfahren zur Eliminierung von schwerflüchtigen lipophilen Stoffen**
Waste water treatment process for the removal of non-volatile lipophilic substances
Procédé de la purification d'eaux usées pour l'élimination des substances lipophiles non-volatiles

(30) Priorität: 18.07.1991 DE 4123764
(43) Veröffentlichungstag der Anmeldung: 20.01.1993
(73) Patentinhaber: INGENIEURGESELLSCHAFT GEHRING UND PARTNER mbH, Institut für Wassertechnologie, Abwasserreinigung und Energietechnik, D-64283 Darmstadt (DE)
(72) Erfinder: Gehring, Harald, Dipl.-Ing., W-6100 Darmstadt (DE)
(74) Vertreter: Pfeifer, Hans-Peter, Dr., Dr. H.-P. Pfeifer Dr. P. Jany, Patentanwälte

(56) Entgegenhaltungen:
- DE-A- 2 542 266
- DE-A- 3 441 528
- US-A- 4 409 091
- US-A- 4 834 889
- F. MEINCK, H. STOOF UND H. KOHLSCHÜTTER 'Industrie-Abwässer' 1986 , GUSTAV FISCHER VERLAG , STUTTGART

## Beschreibung

Die Erfindung betrifft ein Abwasserreinigungsverfahren zur Eliminierung von schwerflüchtigen lipophilen Stoffen. Schwerflüchtige lipophile Stoffe, nämlich Öle und Fette, fallen in vielen Produktionsbetrieben an, insbesondere in der Nahrungsmittelindustrie. Beispiele hierfür sind die Fleisch- und Wurstfabrikation, Schlachthofbetriebe und Betriebe der Fleischverarbeitung und Speisefettraffination. Auch im Gastronomiebereich, insbesondere in Großküchenbetrieben fallen Abwässer an, die Öle und Fette in hoher Konzentration enthalten.

Diese Abwässer führen bereits im Kanalnetz zu Störungen und Behinderungen. Deshalb werden in solchen Betrieben Fettabscheider vorgesehen und vorgeschrieben, die die mit dem Abwasser transportierten festen und flüssigen organischen Fette und Öle allein durch die Schwerkraft abscheiden.

Die Wirksamkeit solcher mechanischen Fettabscheider ist jedoch beschränkt und hängt einerseits vom Öl- und Fettgehalt des zugeführten Abwassers, der anfallenden Abwassermenge und dessen Temperatur ab; andererseits kann derjenige Anteil von Ölen und Fetten, der sich emulgiert oder gelöst im Abwasser befindet, durch den Fettabscheider nicht abgeschieden werden. Diese Emulsionen entstehen durch die in den Betrieben bei der Produktion und beim Reinigen zum Einsatz kommenden Emulgatoren und vor allem durch den Einsatz von Tensiden, waschaktiven Substanzen bei Spül- und Reinigungsvorgängen. Um die Belastung der Kläranlagen durch schwerflüchtige lipophile Stoffe, insbesondere Öle und Fette zu beschränken, werden von den Kommunen im allgemeinen Grenzwerte für deren Gehalt im zugeführten Abwasser vorgeschrieben. Üblicherweise liegt dieser Grenzwert bei 50 mg/l. In der betrieblichen Praxis der Großküchen und Produktionsstätten der Nahrungsmittelindustrie kann dieser Grenzwert jedoch allein durch den Einsatz von Fettabscheidern im allgemeinen nicht eingehalten werden, auch wenn zum Ausgleich von Belastungsspitzen Misch- und Pufferbecken eingesetzt werden. Zur Einhaltung der genannten Abwassergrenzwerte ist daher eine weitergehende Abwasserreinigung notwendig, bevor das vorbehandelte Abwasser der Kläranlage zugeführt wird.

So ist es bekannt, dem mit schwerflüchtigen lipophilen Stoffen belasteten Abwasser in einer Emulsionsspaltanlage Bentonite, Eisensalze und/oder Polyelektrolyte zuzusetzen. Durch diese zugesetzten Stoffe werden die Emulsionen gespalten. Die anfallenden suspendierten Stoffe werden mittels Schwerkraftabscheidung oder Zentrifugation vom Abwasser getrennt.

Die Einhaltung des Grenzwertes von 50 mg/l an schwerflüchtigen lipophilen Stoffen im Abwasser ist jedoch nur bei optimaler Betriebsweise möglich. Da der in der Abscheidung anfallende Dünnschlamm noch einen zu hohen Wasseranteil enthält, um für eine Deponierung geeignet zu sein, muß der Dünnschlamm durch Zugabe von Zuschlagstoffen konditioniert und einer weiteren Entwässerung zugeführt werden, beispielsweise in einer Kammerfilterpresse.

Hierbei wird ein Trockenrückstand von etwa 25 % erreicht. Der hierfür erforderliche Aufwand ist verhältnismäßig hoch. Eine landbauliche Verwertung kommt wegen der zur Emulsionsspaltung zugeführten chemischen Zusätze, die zu erhöhter ökologischer Belastung führen, nicht in Betracht.

Ein anderes bekanntes Verfahren besteht darin, die schwerflüchtigen lipophilen Stoffe durch Flotation abzuscheiden. Hierzu werden im Abwasser sehr kleine Luftblasen erzeugt, die sich an den spezifisch schwereren Stoffen anlagern und diese zum Aufschwimmen bringen. Durch chemische hydrophobe Zusatzstoffe kann die Haftfähigkeit der Luftblasen an den Stoffpartikeln verbessert werden. Der anfallende Flotatschlamm wird über einen obenliegenden Schlammräumer abgezogen.

Ohne die Zugabe von chemischen Zusätzen kann nur ein Trockenrückstand von 5-6 % im Flotatschlamm erreicht werden. Deshalb ist auch dieser Flotatschlamm durch die Zugabe von chemischen Zuschlagstoffen zu konditionieren und einer weiteren Entwässerung, z. B. durch Kammerfilterpressen, zu unterziehen.

Der für dieses Verfahren erforderliche Aufwand ist ebenfalls verhältnismäßig hoch. Auch hiermit kann der genannte Grenzwert von 50 mg/l im Abwasser nur bei einer optimalen Betriebsweise erreicht werden.

Bei optimaler Führung des Flotationsvorgangs und der Zugabe von hydrophoben Zuschlagstoffen und/oder Emulsionsspaltmitteln und/oder Polyelektrolyten kann ein Trockenrückstand von 20 % im Flotatschlamm erzielt werden. Dieser Entwässerungsgrad reicht jedoch für eine Deponierung noch nicht aus, so daß auch hier unter Zugabe von Zuschlagsstoffen auf eine weitere Entwässerung nicht verzichtet werden kann. Eine landbauliche Verwertung kommt auf Grund der genannten chemischen Zusätze, die zu erhöhter ökologischen Belastung führen, nicht in Betracht.

Weitere bekannte Verfahren sehen eine biologische Reinigung des üblicherweise mechanisch vorgereinigten Abwassers vor. Für eine optimale Wirkungsweise dieser biologischen Reinigungsanlagen ist es wichtig, eine möglichst gleichmäßige Abwasserbeschaffenheit und Abwassermenge einzuhalten. Diese Voraussetzungen sind in der Praxis jedoch häufig nicht gegeben. Insbesondere kann eine gleichmäßige Schmutzfracht von schwerflüchtigen lipophilen Stoffen nicht eingehalten werden. Toxische Belastungen, z. B. durch Reinigungsmittel, Desinfektionsmittel, waschaktive Substanzen, Biocide, die häufig unvermeidbar sind, können zu schweren Störungen der biologischen Anlagen führen.

Eine Einhaltung des Grenzwertes von 50 mg/l von schwerflüchtigen lipophilen Stoffen im Abwasser durch biologische Anlagen macht es erforderlich, den Gehalt an Kohlenstoff, Stickstoff und Phosphor in für die Anlage optimalen Bereichen zu halten.

Der anfallende Rückspülschlamm muß mit chemischen Zusätzen konditioniert und auf einen Trockenrückstand von ca. 35 % entwässert werden. Eine Deponierung des anfallenden Filterkuchens ist möglich. Eine landbauliche Verwertung ist ohne chemische Zusätze bei Einhaltung der Klärschlammverordnung möglich.

Aufgabe der Erfindung ist es daher, ein Abwasserreinigungsverfahren der eingangs genannten Gattung zu schaffen, das mit geringem Aufwand durchzuführen ist und allen nachfolgend aufgeführten Forderungen entspricht:
1. Die von den Kommunen und Abwasserverbänden vorgegebenen Grenzwerte für den Gehalt an schwerflüchtigen lipophilen Stoffen und an absetzbaren Stoffen müssen unter allen Betriebsbedingungen nicht nur eingehalten, sondern aus Sicherheitsgründen deutlich unterschritten werden; Geruchsbelästigungen sind auszuschließen;
2. Die Anlage soll einfach und zuverlässig zu bedienen sein; jederzeit einsatzbereit, d.h. ohne Einfahrzeit sein;
3. Die Reinigungs- und Anlagekosten sollen gering sein;
4. Der anfallende Schlamm soll nicht nur deponierfähig, sondern insbesondere auch landbaulich verwertbar sein, um eine Rückführung als Düngemittel in den ökologischen Kreislauf zu ermöglichen.

Diese Aufgabe wird erfindungsgemäß durch das Abwasserreinigungsverfahren nach Anspruch 1 gelöst.

Bei diesem Verfahren wird bewußt eine Verseifung im alkalischen Bereich betrieben. Es handelt sich um eine doppelte Umsetzung. Die anfallenden, als Kalkseifen bezeichneten Calciumsalze sind im Wasser unlöslich und werden daher ausgefällt. Durch die Eliminierung der Öle und Fette werden zugleich der chemische Sauerstoffbedarf (CSB), der biochemische Sauerstoffbedarf (BSB), der organische Kohlenstoffgehalt (TOC), die Trübung und der Gehalt an absetzbaren Stoffen im Abwasser deutlich verringert.

Vorzugsweise wird das Abwasser nach der Zugabe von Calciumhydroxid-Suspension durch eine Reaktionsstrecke zur Einhaltung einer Verweilzeit für die chemische Umsetzung geführt.

Die Abscheidung der ausgefällten Kalkseifen erfolgt vorzugsweise durch Klassierung, beispielsweise in einem Hydrozyklon oder Schrägklärer.

Zweckmäßigerweise wird das Urabwasser vor der Zugabe von Calciumhydroxid durch einen Schlammfang und einen mechanischen Fettabscheider geleitet, somit sind die Grobstoffe eliminiert.

Das nach dem Ausfällen der Calciumsalze anfallende dekantierte Abwasser kann - gegebenenfalls nach einer pH-Wert-Einstellung - dem öffentlichen Kanalnetz zugeführt werden. Die landbauliche Verwertung des anfallenden Trockenschlamms ist ohne Bedenken möglich, ebenso die forstwirtschaftliche Verwertung. Der Schlamm entspricht den Vorschriften der Düngemittelverordnung.

Die Grenzwerte von 50 mg/l an schwerflüchtigen lipophilen Stoffen im Abwasser sowie von 1 ml/l von absetzbaren Stoffen im Abwasser werden mit einem ausreichenden Sicherheitsabstand unter allen Betriebsbedingungen eingehalten.

Der beim Ausfällvorgang anfallende Schlamm kann direkt über Membranfilterpressen oder über Vakuum-Trommeldrehfilter ohne Hilfsschicht z. B. über Keramikplatten mit automatischem Abwurf des Filterkuchens entwässert werden. Bei dieser Entwässerung wird ein Trockenrückstand von 65-85 % erzielt. Dieser Rückstand ist ein homogenes, nichtschmierendes Produkt.

Zur Erläuterung des erfindungsgemäßen Verfahrens:

Zur Eliminierung der im Abwasser vorhandenen lipiden Substanzen wird die alkalische Hydrolyse, durch Zugabe von Calciumhydroxid - Ca(OH)2 - genutzt, die nach der sogenannten doppelten Umsetzung erfolgt.
a) alkalische Hydrolyse - Verseifung
b) Unlöslichkeit der Calciumsalze und deren Ausfällung.

Modellvorstellung bei der alkalischen Hydrolyse mittels Calciumhydroxid - Ca (OH)₂ -
z.Bspl. Glycerintripalmitat (Merck Nr. 4099)

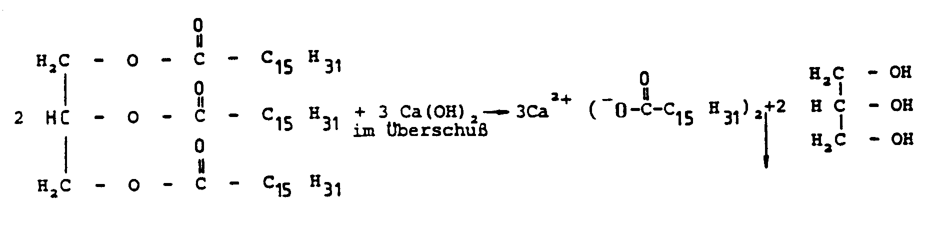

Um eine wirksame Ausfällung zu erreichen, muß das Calciumhydroxid pH-Wert-abhängig zugegeben werden. Eine Übersättigung wirkt sich nicht nachteilig auf die Reinigungsleistung aus. Durch die Anwendung der alkalischen Hydrolyse (Verseifung) beim Abwasserreinigungsverfahren werden die für den Fällungsvorgang mindestens erforderlichen pH-Werte erreicht. Die Fällung ist nach diesem Verfahren besonders effektiv auf Grund der günstigen Sedimentationscharakteristik der entstehenden Kalkseifen.

Im Abwasser nach dem Fällungsvorgang werden die geforderten Grenzwerte für die Abwasserinhaltsstoffe gemäß der üblichen Abwassersatzungen der Kommunen eingehalten.

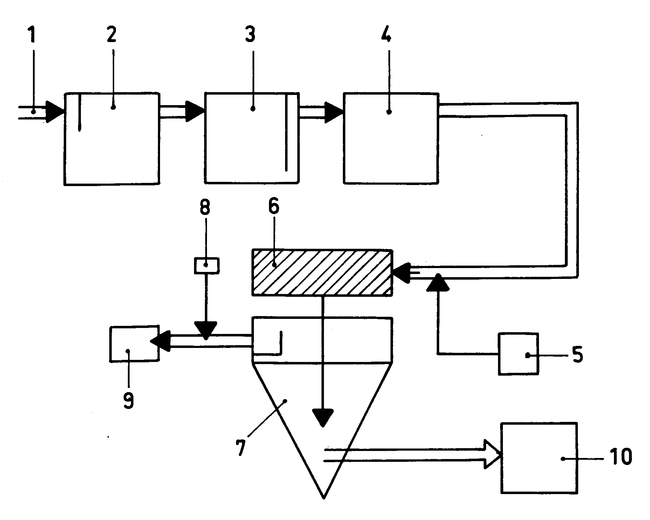

Zur Erläuterung der Erfindung wird ein Ausführungsbeispiel anhand der Zeichnung beschrieben.

Am Abwasserzulauf 1 wird Abwasser mit einem hohen Anteil an schwerflüchtigen lipophilen Stoffen (Öle und Fette) zugeführt, die teilweise in emulgiertem und gelöstem Zustand vorliegen.

Das Abwasser durchläuft einen herkömmlichen Schlammfang 2 und einen Fettabscheider 3, der gemäß DIN 4040 aufgebaut ist. Dort wird ein Teil der Öle und Fette abgeschieden, die nicht emulgiert bzw. gelöst sind.

Nach dem Durchlaufen der aus dem Schlammfang 2 und dem Fettabscheider 3 bestehenden Vorreinigungsstufe wird das Abwasser über einer Übergabestation 4 einer weitergehenden Abwasserreinigung zugeführt. Durch eine Dosiereinrichtung 5 wird dem Abwasser Calciumhydroxid (Ca(OH)2)-Suspension, Kalkmilch, in einer Menge von vorzugsweise 3-30 ml/l je nach Molarität in Abhängigkeit des einzustellenden pH-Wertes 10-12 zugeführt. Das Abwasser gelangt in einen Misch- bzw. Rührreaktor oder in eine Rohrstrecke 6, die in Querschnitt, Länge und Strömungsgeschwindigkeit so dimensioniert wird, daß innerhalb max. 30 sec. eine quantitative Fällung erreicht wird.

Das Durchlaufen dieser Reaktionsstrecke 6 ergibt eine ausreichende Verweilzeit für die chemische Umsetzung des Calciumhydroxids mit den schwerflüchtigen lipophilen Stoffen im Abwasser. Es kommt zu einer alkalischen Hydrolyse (Verseifung) wobei unlösliche Calciumsalze (Kalkseifen) entstehen.

In einem nachgeschalteten Hydrozyklon oder Schrägklärer 7 erfolgt eine Klassierung, d.h. eine Trennung der flüssigen Abwasserphase von der Schlammphase, d.h. eine Aufkonzentrierung des Dünnschlammes von ca. 1-2 % auf 4-6 %.

Das Abwasser wird gegebenenfalls mittels einer pH-Wert-Reguliereinrichtung 8, beispielsweise durch Zugabe von Salzsäure, auf den gewünschten pH-Wert, gemäß Abwassersatzung unterhalb des oberen Grenzwertes gebracht und einem Ablauf 9 für das vorgereinigte Abwasser zugeführt. Von dort kann es in das kommunale Kanalnetz abgegeben und einer Kläranlage zugeführt werden.

Der nach der Klassierung im Hydrozyklon oder Schrägklärer, Sedimentationsstufe 7 abgezogene Dünnschlamm wird einer Schlammeindickung oder Entwässerungseinrichtung 10 zugeführt und dort auf einen Trockenrückstand von 65-85 % entwässert. Kleinanlagen werden mittels Schwerkraftentwässerung auf einen Trockenrückstand von 20-25 % entwässert. Der hierbei anfallende Filterkuchen stellt ein wertvolles Wirtschaftsgut dar, das einer land- oder forstwirtschaftlichen Verwertung oder einer sonstigen Düngemittelverwertung zugeführt werden kann. Es wird somit in den ökologischen Kreislauf der Natur zurückgeführt. Dadurch wird Deponieren gespart. Das Filtrat aus der Entwässerung kann nach pH-Wert-Regulierung 8 dem Ablauf 9 zugeführt werden.

## Patentansprüche

1. Abwasserreinigungsverfahren zum Abtrennen schwerflüchtiger lipophiler Stoffe aus dem Abwasser eines Nahrungsmittel verarbeitenden oder herstellenden Betriebes,
**dadurch gekennzeichnet,** daß
dem die schwerflüchtigen lipophilen Stoffe, nämlich Öle und Fette, enthaltenden Abwasser Calciumhydroxid-Suspension, nämlich Kalkmilch) zugesetzt wird, die bei der alkalischen Hydrolyse der schwerflüchtigen lipophilen Stoffe entstehenden Seifen als unlösliche Calciumsalze ausgefällt und als Schlamm abgezogen werden, wobei der beim Ausfällen anfallende Schlamm eine solche Zusammensetzung aufweist, daß er land- oder forstwirtschaftlich als Düngemittel verwertbar ist.

2. Verfahren nach Anspruch 1, **dadurch gekennzeichnet,** daß die Calciumhydroxid-Suspension in einer solchen Menge zugesetzt wird, daß das nach dem Ausfällen der Calciumsalze und dem Schlammabzug anfallende Abwasser weniger als 50 mg/l an schwerflüchtigen lipophilen Stoffen enthält.

3. Verfahren nach Anspruch 1, **dadurch gekennzeichnet,** daß die Calciumhydroxid-Suspension in einer solchen Menge zugesetzt wird, daß das nach dem Ausfällen der Calciumsalze und dem Schlammabzug anfallende Abwasser weniger als 1 ml/l an absetzbaren Stoffen enthält.

4. Abwasserreinigungsverfahren nach Anspruch 1, **dadurch gekennzeichnet,** daß die Calciumhydroxid-Suspension je nach ihrer Molarität in einer Menge von 3 bis 30 ml/l zugesetzt wird, so daß in dem Abwasser ein pH-Wert zwischen 10 und 12 eingestellt wird.

5. Abwasserreinigungsverfahren nach Anspruch 1, **dadurch gekennzeichnet,** daß das Abwasser nach der Zugabe von Calciumhydroxid-Suspension durch eine Reaktionsstrecke zur Einhaltung einer Verweilzeit für die chemische Umsetzung bei der Ausfällung geführt wird.

6. Abwasserreinigungsverfahren nach Anspruch 1, **dadurch gekennzeichnet,** daß die ausgefällten unlöslichen Calciumsalze durch Sedimentation aus dem Abwasser abgeschieden werden.

7. Abwasserreinigungsverfahren nach Anspruch 6, **dadurch gekennzeichnet,** daß die ausgefällten unlöslichen Calciumsalze in einem Hydrozyklon oder Schrägklärer aus dem Abwasser abgeschieden werden.

8. Abwasserreinigungsverfahren nach Anspruch 1, **dadurch gekennzeichnet,** daß das betriebliche Abwasser vor der Zugabe von Calciumhydroxid-Suspension durch einen Schlammfang und einen mechanischen Fettabscheider geleitet wird.

9. Abwasserreinigungsverfahren nach Anspruch 1, **dadurch gekennzeichnet,** daß der anfallende Schlamm einem Entwässerungsvorgang unterzogen wird.

10. Abwasserreinigungsverfahren nach Anspruch 1, **dadurch gekennzeichnet,** daß das nach dem Ausfällen der Calciumsalze und dem Schlammabzug anfallende Abwasser einer pH-Wert-Regulierung unterzogen wird.

## Claims

1. Waste water treatment process for the removal of non-volatile lipophilic substances from the waste water of a factory processing or manufacturing foodstuffs,
**characterized in that**, to the waste water containing the non-volatile lipophilic substances, namely oils and fats, calcium hydroxide suspension, namely lime milk, is added which precipitates the soaps occurring as insoluble calcium salts in the alkaline hydrolysis of the non-volatile lipophilic substances and are drawn off as sludge, whereby the sludge resulting upon precipitation displays such a composition that it can be used as fertilizer in agriculture and forestry.

2. Process according to claim 1, **characterized in that** the calcium hydroxide suspension is added in such a quantity that the waste water resulting after the precipitation of the calcium salts and the drawing off of the sludge contains less than 50 mg/l of non-volatile lipophilic substances.

3. Process according to claim 1, **characterized in that** the calcium hydroxide suspension is added in such a quantity that the waste water resulting after precipitation of the calcium salts and the drawing off of the sludge contains less than 1 ml/l of settleable substances.

4. Waste water treatment process according to claim 1, **characterized in that** the calcium hydroxide suspension is added in a quantity of 3 to 30 ml/l, depending on its molarity, thus adjusting the pH of the waste water to between 10 and 12.

5. Waste water treatment process according to claim 1, **characterized in that** the waste water after addition of calcium hydroxide suspension is led through a reaction course to observe a sojourn time for the chemical conversion in the precipitation.

6. Waste water treatment process according to claim 1 **characterized in that** the precipitated insoluble calcium salts are separated from the waste water by sedimentation.

7. Waste water treatment process according to claim 6 **characterized in that** the precipitated insoluble calcium salts are separated from the waste water in a hydrocyclone or inclined clarifier.

8. Waste water treatment process according to claim 1 **characterized in that** the industrial waste water is led through a sludge trap and a mechanical fat separator before the addition of the calcium hydroxide suspension.

9. Waste water treatment process according to claim 1 **characterized in that** the resulting sludge is subjected to a dehydration process.

10. Waste water treatment process according to claim 1 **characterized in that** the waste water resulting after precipitation of the calcium salts and the drawing off of the sludge is subjected to regulation of the pH.

## Revendications

1. Procédé de purification d'eaux usées pour la séparation de substances lipophiles difficilement volatiles d'avec les eaux usées d'une installation de production ou de conditionnement d'aliments, caractérisé en ce qu'une suspension d'hydroxyde de calcium, à savoir du lait de chaux, est ajoutée aux eaux usées contenant les substances lipophiles difficilement volatiles, à savoir des huiles et des graisses, les savons formés lors de l'hydrolyse alcaline des substances lipophiles difficilement volatiles sont précipités sous forme de sels de calcium insolubles qui sont éliminés sous forme de boues, lesquelles boues produites lors de la précipitation présentent une composition telle qu'elles sont utilisables comme engrais dans l'agriculture ou la sylviculture.

2. Procédé selon la revendication 1, caractérisé en ce que la suspension d hydroxyde de calcium est ajoutée en une quantité telle que les eaux usées produites après la précipitation des sels de calcium et l'élimination des boues contiennent moins de 50 mg/l de substances lipophiles difficilement volatiles.

3. Procédé selon la revendication 1, caractérisé en ce que la suspension d hydroxyde de calcium est ajoutée en une quantité telle que les eaux usées produites après la précipitation des sels de calcium et l'élimination des boues contiennent moins de 1 ml/l de substances décantables.

4. Procédé de purification d'eaux usées selon la revendication 1, caractérisé en ce que la suspension d'hydroxyde de calcium est ajoutée à raison de 3 à 30 ml/l selon sa molarité de façon que s'établisse dans les eaux usées un pH compris entre 10 et 12.

5. Procédé de purification d'eaux usées selon la revendication 1, caractérisé en ce que les eaux usées après addition de la suspension d'hydroxyde de calcium traverse un zone de réaction afin de maintenir une durée de séjour pour la transformation chimique lors de la précipitation.

6. Procédé de purification d'eaux usées selon la revendication 1, caractérisé en ce que les sels précipités insolubles de calcium sont séparés d avec les eaux usées par sédimentation.

7. Procédé de purification d'eaux usées selon la revendication 6, caractérisé en ce que les sels précipités insolubles de calcium sont séparés d'avec les eaux usées dans un hydrocyclone ou un clarificateur à plaques inclinées.

8. Procédé de purification d'eaux usées selon la revendication 1, caractérisé en ce que les eaux usées d'une installation sont dirigées à travers un bassin de dépôt des boues et un séparateur de graisse avant l'addition de la suspension d'hydroxyde de calcium.

9. Procédé de purification d'eaux usées selon la revendication 1, caractérisé en ce que les boues produites sont soumises à un processus de déshydratation.

10. Procédé de purification d'eaux usées selon la revendication 1, caractérisé en ce que les eaux usées produites, après la précipitation des sels de calcium et l'élimination des boues, sont soumises à une régulation de pH.
